# EUROPEAN PATENT APPLICATION

(11) **EP 3 510 874 A2**
(43) Date of publication of application: **17.07.2019**
(21) Application number: 19150001.6
(22) Date of filing: 03.06.2011
(51) Int. Cl.: A23L 33/16, A23L 2/39, A23L 2/52

(54) **ELECTROLYTE BLENDS PROVIDING REDUCED SALTY TASTE**

(30) Priority: 03.06.2010 US 35117210 P
(62) Divisional of application: 11727045.4
(71) Applicant: Stokely-Van Camp, Inc., Chicago, IL 60661 (US)
(72) Inventor: RINALDI, Vincent, Bethel, CT Connecticut 06801 (US); WEE, Jia, Khiun, Hoffman Estates, IL Illinois 60192 (US); BRASLAVSKAYA, Marina, Arlington Heights, IL Illinois 60005 (US); ALI, Zeinab, Crystal Lake, IL Illinois 60012 (US); AUBRY, Victoire, Inverness, IL Illinois 60067 (US)
(74) Representative: Duxbury, Stephen

(57) **Abstract**

An electrolyte blend is provided having a minimal salty taste in water or other rehydration compositions. One electrolyte blend includes sodium lactate and potassium chloride. An alternate electrolyte blend includes sodium lactate, potassium gluconate, and calcium chloride. The electrolyte blend may be provided as a beverage product, for example a rehydration product containing carbohydrates. In addition, a rehydration beverage composition is provided including water, at least one sweetener, at least one acid, and an electrolyte blend including sodium chloride, sodium lactate, and at least one of potassium chloride, potassium citrate and monopotassium phosphate. An alternate beverage composition is provided including water, at least one sweetener, at least one acid, and an electrolyte blend including sodium chloride, magnesium oxide, calcium lactate, and at least one of potassium chloride, potassium citrate, monopotassium phosphate, sodium lactate and calcium chloride.

## Description

### FIELD OF THE INVENTION

This invention relates to electrolyte blends and beverage compositions comprising the electrolyte blends. In particular, this invention relates to rehydration products such as powders and beverages (e.g., sports drinks) having improved taste due to reduced saltiness as compared to typical rehydration products containing electrolytes.

### BACKGROUND

It has long been known to produce beverages of various formulations. Improved and new formulations are desirable to achieve desired nutritional characteristics, flavor, shelf life, and other objectives.

Rehydration products such as beverages, powders for reconstitution as beverages, tablets, gels, chews, or other forms, may be used in conjunction with physical activity, such as exercise, to replenish fluids and electrolytes lost during the activity, as well as to provide additional energy. For instance, rehydration beverages typically comprise at least water and electrolytes, and generally also carbohydrates. The electrolytes usually included in such beverages are sodium chloride, sodium citrate and monopotassium phosphate. Rehydration products generally provide a salty taste due to the presence of the electrolytes, however not all consumers prefer products that taste salty and may thus not consume a sufficient amount of the product to achieve rehydration. It would therefore be desirable to provide a product comprising electrolytes that does not taste salty or that has a minimal salty taste, to encourage greater product consumption and resulting rehydration.

It is an object of the invention to provide an electrolyte blend that provides electrolytes for rehydration with a low associated salty taste. It is a further object of the invention to provide rehydration/sports beverages, containing such electrolyte blends, having little or no salty taste. These and other objects, features and advantages of the invention or of certain embodiments of the invention will be apparent to those skilled in the art from the following disclosure and description of exemplary embodiments.

The disclosure also includes the following clauses:
1. An electrolyte blend consisting essentially of sodium lactate and potassium chloride.
2. The electrolyte blend of clause 1, wherein the blend is a powder for reconstitution into a beverage.
3. A beverage comprising the electrolyte blend of clause 1; and water, wherein the beverage comprises zero calories.
4. The beverage of clause 3, further comprising at least one of maltodextrin, isomaltulose, and dextrose, wherein the beverage exhibits a salty taste of less than 1.5 on a scale of 0 to 15 as determined by a trained sensory panel, wherein a salty taste of a 0.70 wt. % solution of sodium chloride equals 15 on the scale and a salty taste of water subjected to reverse osmosis equals 0 on the scale.
5. The beverage of clause 3, comprising 50 to 220 mg sodium per serving; 20 to 110 mg chloride per serving; and 80 to 100 mg potassium per serving.
6. A beverage comprising water; and an electrolyte blend consisting essentially of sodium lactate and potassium chloride.
7. An electrolyte blend comprising sodium lactate; potassium gluconate; and calcium chloride.
8. The electrolyte blend of clause 7, wherein the blend is a powder for reconstitution into a beverage.
9. A beverage comprising the electrolyte blend of clause 7; and water, wherein the beverage comprises less than 40 calories per 240 ml.
10. The beverage of clause 9, further comprising at least one of maltodextrin, isomaltulose, glycerol, and dextrose.
11. The beverage of clause 9, wherein the beverage exhibits a salty taste of less than 1.5 on a scale of 0 to 15 as determined by a trained sensory panel, wherein a salty taste of a 0.70 wt. % solution of sodium chloride equals 15 on the scale and a salty taste of water subjected to reverse osmosis equals 0 on the scale.
12. A beverage comprising:
   water; and
   the electrolyte blend of clause 7, comprising:
   50 to 220 mg sodium per serving;
   20 to 110 mg potassium per serving;
   80 to 100 mg chloride per serving; and
   50 mg calcium per serving;
   wherein a serving comprises 240 milliliters of the beverage.
13. The beverage of clause 12, wherein the beverage exhibits a salty taste of less than 1.5 on a scale of 0 to 15 as determined by a trained sensory panel, wherein a salty taste of a 0.70 wt. % solution of sodium chloride in water equals 15 on the scale and a salty taste of water subjected to reverse osmosis equals 0 on the scale.
14. A beverage comprising:
   water;
   at least one sweetener, the at least one sweetener present in an amount between 0 wt. % and 10 wt. %;
   at least one acid, the at least one acid present in an amount between 0 wt. % and 1.0 wt. %; and
   an electrolyte blend comprising:
      sodium chloride;
      sodium lactate; and
      at least one of potassium chloride, potassium citrate and monopotassium phosphate.
15. The beverage of clause 14, wherein the at least one sweetener is selected from the group consisting of sucrose, isomaltulose, rebaudioside A, and combinations thereof.
16. The beverage of clause 14, wherein the beverage exhibits a salty taste of less than 1.5 on a scale of 0 to 15 as determined by a trained sensory panel, wherein a salty taste of a 0.70 wt. % solution of sodium chloride in water equals 15 on the scale and a salty taste of water subjected to reverse osmosis equals 0 on the scale.
17. The beverage of clause 14, wherein the beverage exhibits a salty taste that is lower than a salty taste of the same beverage except that the electrolyte blend consists of sodium chloride, sodium citrate, and potassium phosphate in amounts that provide the same milligrams per serving of sodium, potassium and chloride.
18. The beverage of clause 14, further comprising magnesium and calcium.
19. The beverage of clause 18, wherein the magnesium comprises magnesium oxide and the calcium comprises calcium lactate.
20. The beverage of clause 18, wherein the electrolyte blend provides 50 to 250 mg sodium per serving, 20 to 350 mg potassium per serving, 10 to 250 mg chloride per serving, 10 to 50 mg magnesium per serving and 10 to 50 mg calcium per serving, and wherein the beverage exhibits a salty taste of less than 5.0 on a scale of 0 to 15 as determined by a trained sensory panel, wherein a salty taste of a 0.70 wt. % solution of sodium chloride in water equals 15 on the scale and a salty taste of water subjected to reverse osmosis equals 0 on the scale.

### SUMMARY

The invention may be embodied in various exemplary and nonlimiting forms. In particular, this Summary is intended merely to illuminate various embodiments of the invention and does not impose a limitation on the scope of the invention.

In accordance with one aspect, an electrolyte blend is provided comprising sodium lactate and potassium chloride. The blend is optionally a powder for reconstitution into a beverage. In another aspect, a beverage is provided comprising water and the electrolyte blend of sodium lactate and potassium chloride, wherein the beverage comprises zero calories.

In a further aspect, an electrolyte blend is provided comprising sodium lactate, potassium gluconate, and calcium chloride, such as in the form of a powder for reconstitution as a beverage. Alternatively, the electrolyte blend is provided as a beverage product.

In yet another aspect, a rehydration beverage is provided comprising water, at least one sweetener, at least one acid, and an electrolyte blend comprising sodium chloride, sodium lactate, and at least one of potassium chloride, potassium citrate and monopotassium phosphate.

In certain embodiments of beverage products according to the invention, the beverage products further comprise at least one carbohydrate. The carbohydrate may be present in an amount of 0-10% carbohydrates, such as 0%, 3%, 4%, or 6%. Preferably, the carbohydrate is at least one of maltodextrin, isomaltulose, glycerol (e.g., often referred to as glycerine) and dextrose. Embodiments of the beverage products may further comprise at least one sweetener, which may or may not also act as a carbohydrate. The at least one sweetener is optionally sucrose, isomaltulose, rebaudioside A, or combinations thereof.

In another aspect, a beverage is provided comprising water, at least one sweetener present in an amount between 0 wt. % and 10 wt. %, at least one acid present in an amount between 0 wt. % and 1 wt. %, and an electrolyte blend comprising sodium chloride, magnesium oxide, calcium lactate, and at least one of potassium chloride, potassium citrate, monopotassium phosphate, sodium lactate and calcium chloride. The electrolyte blend provides 50 to 250 mg sodium per serving, 20 to 350 mg potassium per serving, 10 to 250 mg chloride per serving, 10 to 50 mg magnesium per serving and 10 to 50 mg calcium per serving.

It will be appreciated by those skilled in the art, given the benefit of the following description of certain exemplary embodiments of the electrolyte blend and beverage products disclosed here, that at least certain embodiments of the invention have improved or alternative formulations suitable to provide desirable taste profiles, nutritional characteristics, etc. These and other aspects, features and advantages of the invention or of certain embodiments of the invention will be further understood by those skilled in the art from the following description of exemplary embodiments.

### DETAILED DESCRIPTION OF EMBODIMENTS

It should be understood that electrolyte blends, beverages and other beverage products in accordance with this disclosure may have any of numerous different specific formulations or constitutions. The formulation of a composition in accordance with this disclosure can vary to a certain extent, depending upon such factors as the product's intended market segment, its desired nutritional characteristics, flavor profile and the like. For example, the form of the electrolyte blend varies; embodiments of the inventive electrolyte blends may be provided in the form of a dry powder, a tablet, a chew (e.g., confectionary chews, gummy chews, etc.), a gel, a concentrated shot, a ready-to-drink beverage, a beverage concentrate or syrup, a bar, a dairy- or fruit-based shake or smoothie, or any other form for comestibles. It will generally be an option to add further ingredients to the formulation of a particular embodiment, including any of the formulations described below. Additional (i.e., more and/or other) sweeteners may be added, flavorings, vitamins, colorants, fruit products, tastants, masking agents and the like, and/or flavor enhancers typically can be added to any such formulations to vary the taste, mouthfeel, nutritional characteristics, etc. Based on the guidance provided herein, formulating such other products will be well within the ability of one skilled in the art of formulating food products; such products are also covered by the scope of this invention.

In certain embodiments of the present invention an electrolyte blend is provided, which may be employed in numerous different comestible products, for example powders, tablets, gels, concentrated shots, beverage compositions, snack bars or meal replacement bars, confectioneries, shakes, smoothies, supplements, or other foods. Electrolytes are typically included in comestible products to replace elements lost during physical activity, thereby improving health and endurance performance. Electrolyte blends according to embodiments of the invention comprise sodium, potassium, chloride, calcium, and magnesium. In an embodiment, the electrolyte blend consists essentially of electrolyte salts, for instance sodium lactate, potassium gluconate, calcium chloride (anhydrous), potassium chloride, potassium citrate, sodium chloride, sodium acid sulfate, monopotassium phosphate, calcium lactate, magnesium oxide, and combinations thereof. In an alternate embodiment, the electrolyte blend comprises electrolyte salts in combination with carbohydrates, for example maltodextrin, isomaltulose, dextrose, sucrose, glycerol, and combinations thereof.

In general, a rehydration product in accordance with this disclosure typically comprises at least water and electrolytes. Optional additional ingredients include carbohydrates, sweeteners, acidulant and flavoring. Similarly, a rehydration/sports beverage in accordance with this disclosure typically comprises at least water, electrolytes, acidulant, sweeteners and flavoring, as well as typically also one or more carbohydrates.

Advantageously, embodiments of the present invention provide compositions, such as electrolyte blends and rehydration beverage compositions, in which the electrolytes provide a low salty taste of the compositions. It was discovered that certain combinations of electrolytes could provide an appropriate amount of electrolytes for rehydration without imparting a significantly salty taste, as determined by a trained sensory panel. Embodiments of the invention provide compositions that exhibit a less salty taste than compositions containing the same amount of electrolytes provided by alternate electrolyte salts. Without wishing to be bound by theory, it is believed that the speed at which a compound is tasted is inversely proportional to the size of the compound, thus a larger compound, such as sodium lactate, requires more time in contact with taste buds to register a taste than a smaller compound, such as sodium chloride. However, to provide a predetermined amount of an electrolyte, for instance, sodium, by a compound in a product, a greater amount by weight of a compound having a large molecular weight is required in the product. Typically, the higher the concentration of an ingredient in a product, the more the ingredient will affect the product's taste, thus a large amount of a less salty-tasting compound may in fact provide a similar degree of saltiness as a smaller amount of a more salty-tasting compound, for example. It was therefore surprising that the electrolyte blends of the present invention are capable of providing the desired electrolyte amounts of 50 mg to 220 mg sodium, 20 mg to 350 mg potassium and 80 mg to 350 mg chloride, while providing a low salty taste to the product. In certain embodiments of the invention, the electrolyte blends, when dissolved in water, provide a salty taste of less than 5.0, or less than 4.5, or less than 4.0, or less than 3.5, or less than 3.0, or less than 2.5, or less than 2.4, or less than 2.3, or less than 2.2, or less than 2.1, or less than 2.0, or less than 1.9, or less than 1.8, or less than 1.7, or less than 1.6, or less than 1.5, or less than 1.4, or less than 1.3, or less than 1.2, or less than 1.1, or less than 1.0, as determined by a trained sensory panel using a scale of 0 to 15, wherein a 0.70 weight percent solution of sodium chloride in water is equal to a salty taste of 15 and water (i.e., water that has been subjected to reverse osmosis) is equal to a salty taste of 0.

In certain embodiments, the electrolyte blend includes an electrolyte source for providing sodium (Na). Sodium may be provided by compounds of sodium, such as sodium chloride, sodium lactate, trisodium citrate, sodium gluconate, monosodium phosphate, disodium phosphate, trisodium phosphate, tetrasodium acid pyrophosphate, sodium acid sulfate, sodium carbonate, sodium bicarbonate, or combinations thereof. In one embodiment, the sodium is provided by sodium lactate, which is about 20.5% by weight sodium. In another embodiment, the sodium is provided by sodium chloride, which is about 39.4% by weight sodium. In a further embodiment, the sodium is provided by sodium acid sulfate, which is about 19.2% by weight sodium. The use of sodium acid sulfate may be desirable for applications in which an acidulant is also needed, as sodium acid sulfate acts as both a sodium source and an acidulant. Moreover, sodium acid sulfate has a high pKa value, thus less acid is needed to lower the pH of a composition containing sodium acid sulfate than containing acids having lower pKa values. In yet another embodiment, the sodium is provided by sodium gluconate, which is about 10.5% by weight sodium.

In select beverage embodiments, the amount of sodium is about 0.03% by weight to about 0.06% by weight of the finished product. For beverages, in certain embodiments, sodium is provided in an amount of 50 to 250 milligrams (mg) per serving, or 50 to 220 mg per serving, such as about 110 mg or about 200 mg. A serving comprises 120 milliliters, or 240 ml, or 500 ml, or 591 ml, for example. Other amounts may also be useful, depending on the application and other factors.

In certain embodiments, the electrolyte blend includes an electrolyte source for providing potassium (K). Potassium may be provided by compounds of potassium, such as potassium chloride, potassium citrate, potassium gluconate, monopotassium phosphate, dipotassium phosphate, tripotassium phosphate, tetrapotassium pyrophosphate, potassium sulfate, potassium acetate, potassium bicarbonate, potassium bromide, or combinations thereof. In one embodiment, the potassium is provided by potassium lactate, which is about 52.5% by weight potassium. In another embodiment, the potassium is provided by potassium gluconate, which is about 16.7% by weight potassium. In yet another embodiment, the potassium is provided by monopotassium phosphate, which is about 28.7% by weight potassium. In such an embodiment, monopotassium phosphate comprises around about 0.0435% by weight of a beverage composition. In a further embodiment, the potassium is provided by potassium chloride, which is about 52.5% by weight potassium. In a still further embodiment, the potassium is provided by potassium citrate, which is about 38.3% by weight potassium. In one embodiment of a sports beverage, the potassium ions are provided by monopotassium phosphate. In a further embodiment, the potassium ions are provided by potassium chloride. In yet another embodiment, the potassium ions are provided by at least one of monopotassium phosphate, potassium chloride and potassium citrate.

In select beverage embodiments, the amount of potassium is about 0.005% by weight to about 0.03% by weight of the finished product. For beverages, in certain embodiments, potassium is provided in an amount of 20 to 110 milligrams per serving, or 20 to 350 milligrams per serving, such as about 30 mg, or about 90 mg, or about 250 mg. A serving comprises 120 milliliters, or 240 ml, or 500 ml, or 591 ml, for example. Other amounts may also be useful, depending on the application and other factors.

In certain embodiments, the electrolyte blend includes an electrolyte source for providing chloride (CI). Chloride may be provided by compounds of chloride, such as magnesium chloride hexahydrate, potassium chloride, sodium chloride, anhydrous calcium chloride, or combinations thereof. In one embodiment, the chloride is provided by potassium chloride, which is about 47.5% by weight chloride. In another embodiment, the chloride is provided by sodium chloride, which is about 60.6% by weight chloride. In a further embodiment, the chloride is provided by calcium chloride (anhydrous), which is about 63.9% by weight chloride.

In select beverage embodiments, the amount of chloride is about 0.03% by weight to about 0.06% by weight of the finished product. For beverages, in certain embodiments, chloride is provided in an amount of 80 to 350 milligrams per serving, or 10 to 250 mg chloride per serving, such as about 90 mg or about 225 mg, or about 300 mg. A serving comprises 120 milliliters, or 240 ml, or 500 ml, or 591 ml, for example. Other amounts may also be useful, depending on the application and other factors.

In certain embodiments, the electrolyte blend includes an electrolyte source for providing calcium (Ca). Calcium may be provided by compounds of calcium, such as anhydrous calcium chloride, calcium acetate, calcium chloride, calcium citrate, calcium-D-gluconate, calcium lactate, calcium levulinate, dibasic calcium phosphate. In one embodiment, the calcium is provided by calcium chloride anhydrous, which is about 36.1% by weight calcium.

In select beverage embodiments, the amount of calcium is about 0.01% by weight to about 0.03% by weight of the finished product. For beverages, in certain embodiments, calcium is provided in an amount of 10 to 50 milligrams per serving, such as about 25 mg or about 50 mg. A serving comprises 120 milliliters, or 240 ml, or 500 ml, or 591 ml, for example. Other amounts may also be useful, depending on the application and other factors.

In certain embodiments, the electrolyte blend includes an electrolyte source for providing magnesium (Mg). Magnesium may be provided by compounds of magnesium, such as magnesium oxide, magnesium chloride, magnesium carbonate and magnesium sulfate, or a combination thereof. In one embodiment, the calcium is provided by calcium chloride anhydrous, which is about 36.1% by weight calcium.

In select beverage embodiments, the amount of magnesium is about 0.01% by weight to about 0.03% by weight of the finished product. For beverages, in certain embodiments, magnesium is provided in an amount of 10 to 50 milligrams per serving, such as about 15 mg or about 30 mg. A serving comprises 120 milliliters, or 240 ml, or 500 ml, or 591 ml, for example. Other amounts may also be useful, depending on the application and other factors.

In certain embodiments, the beverage may contain about 0.03% by weight to about 0.06% by weight of sodium, about 0.005% by weight to about 0.04% by weight of potassium, about 0.01% by weight to about 0.02% by weight of magnesium, about 0.001% by weight to about 0.003% by weight of calcium, about 0.02% by weight to about 0.03% by weight of chloride. Other amounts or combinations may also be useful.

As used herein, "taste" refers to the overall perception of a balance of the sweet-tart-salty quality of a beverage composition, including a combination of sweetness-tartness-saltiness flavor perception, temporal effects of the flavor perception, i.e., on-set and duration, off-tastes, e.g. bitterness and metallic taste, residual perception (aftertaste) and tactile perception, e.g. body and thickness. As used herein, the term "light taste" refers to a low aftertaste, i.e., residual perception, of any of the tastes of a composition, such as of at least a salty residual taste perception.

Accordingly, the matrix in which an electrolyte blend is incorporated will determine which specific compounds should be selected to provide optimum taste. For embodiments in which the electrolyte blend is included in a rehydration beverage comprising at least one sweetener and at least one acidulant, for example, electrolytes will be selected to balance the sweet and tart tastes of the other ingredients. This is in contrast to a beverage product that includes only water and an electrolyte blend, in which the least salty-tasting electrolyte blend is ideal to provide a clean or light taste to the beverage product.

In embodiments providing a packaged ready-to-drink beverage, the beverage composition may be pre-mixed with a liquid such as water. In certain embodiments, the ready-to-drink beverage comprises about 80-99 weight percent (wt %) of liquid of the total weight of the beverage. Unless otherwise specified, all weight percentages are based on the total weight of a ready-to-drink beverage. In further embodiments, the beverage composition can be packaged as an edible composition or concentrate, such as a dry mix (e.g., powder), tablet, or a liquid concentrate for later reconstitution with one or more liquids to form a beverage. The concentrated composition may be associated with instructions for preparing the beverage composition. In another embodiment, a beverage concentrate may be packaged as gels, capsules, or tablets which are consumed with liquid. When provided in these forms, the beverage composition may comprise instructions to mix or consume with an amount of liquid which is equal to about 80-99 wt % of the prepared beverage composition.

Beverage compositions according to different embodiments comprise one or more electrolyte source(s). The beverage may be a rehydration beverage and further include carbohydrates, edible acids, coloring agents, flavoring agents, vitamins, functional ingredients and combinations thereof. Exemplary flavorings which may be suitable for at least certain formulations in accordance with this disclosure include fruit flavoring, citrus flavoring, spice flavorings and others. Preservatives can be added if desired, depending upon the other ingredients, production technique, desired shelf life, etc. Additional and alternative suitable ingredients will be recognized by those skilled in the art given the benefit of this disclosure.

At least certain exemplary embodiments of beverage concentrates contemplated are prepared with an initial volume of water to which the additional ingredients are added. Full strength beverage compositions can be formed from the beverage concentrate by adding further volumes of water to the concentrate. Typically, for example, full strength beverages can be prepared from the concentrates by combining approximately 1 part concentrate with between approximately 3 to approximately 7 parts water. In certain exemplary embodiments the full strength beverage is prepared by combining 1 part concentrate with 5 parts water. In certain exemplary embodiments the additional water used to form the full strength beverages is carbonated water. In certain other embodiments, a full strength beverage is directly prepared without the formation of a concentrate and subsequent dilution.

Water is a basic ingredient in the beverage products disclosed here, typically being the vehicle or primary liquid portion in which the remaining ingredients are dissolved, emulsified, suspended or dispersed. Purified water can be used in the manufacture of certain embodiments of the beverages disclosed here, and water of a standard beverage quality can be employed in order not to adversely affect beverage taste, odor, or appearance. The water typically will be clear, colorless, free from objectionable minerals, tastes and odors, free from organic matter, low in alkalinity and of acceptable microbiological quality based on industry and government standards applicable at the time of producing the beverage. In certain typical embodiments, water is present at a level of from about 80% to about 99.9% by weight of the beverage. In at least certain exemplary embodiments the water used in beverages and concentrates disclosed here is "treated water," which refers to water that has been treated to reduce the total dissolved solids of the water prior to optional supplementation, e.g., with calcium as disclosed in U.S. patent no. 7,052,725. Methods of producing treated water are known to those of ordinary skill in the art and include deionization, distillation, filtration and reverse osmosis ("r-o"), among others. The terms "treated water," "purified water,", "demineralized water," "distilled water," and "r-o water" are understood to be generally synonymous in this discussion, referring to water from which substantially all mineral content has been removed, typically containing no more than about 500 ppm total dissolved solids, e.g. 250 ppm total dissolved solids.

Non-mineral nutritive compounds such as vitamins can be added to the beverage products. Examples of non-mineral nutritional supplement ingredients are known to those of ordinary skill in the art and include, for example, antioxidants and vitamins, including Vitamins A, D, E (tocopherol), C (ascorbic acid), B₁ (thiamine), B₂ (riboflavin), B₆, B₁₂, and K, niacin, folic acid, biotin, and combinations thereof. The optional non-mineral nutritional supplements are typically present in amounts generally accepted under good manufacturing practices. Exemplary amounts are between about 1% and about 100% RDV, where such RDV are established. In certain exemplary embodiments the non-mineral nutritional supplement ingredient(s) are present in an amount of from about 5% to about 20% RDV, where established.

Acid used in beverage products disclosed here can serve any one or more of several functions, including, for example, providing antioxidant activity, lending tartness to the taste of the beverage, enhancing palatability, increasing thirst quenching effect, modifying sweetness and acting as a mild preservative by providing microbiological stability. Any suitable edible acidulant may be used, for example citric acid, malic acid, tartaric acid, phosphoric acid, ascorbic acid, lactic acid, formic acid, fumaric acid, gluconic acid, succinic acid, maleic acid, sodium acid sulfate and/or adipic acid. The acid can be used in solution form, for example, and in an amount sufficient to provide the desired pH of the beverage. Typically, for example, the one or more acids of the acidulant are used in amount, collectively, of from about 0.01% to about 1.0% by weight of the beverage, e.g., from about 0.05% to about 0.5% by weight of the beverage, such as 0.1% to 0.25% by weight of the beverage, depending upon the acidulant used, desired pH, other ingredients used, etc.

As used herein, a "full-calorie" beverage formulation is one fully sweetened with a nutritive sweetener. The term "nutritive sweetener" refers generally to sweeteners which provide significant caloric content in typical usage amounts, e.g., more than about 5 calories per 8 oz. serving of beverage. In certain embodiments of the invention the nutritive sweetener includes one or more carbohydrates, which are present in an amount of 0-10% carbohydrates, such as 0%, 3%, 4%, or 6%. Preferably, the carbohydrate is at least one of maltodextrin, isomaltulose, sucrose, glycerol, and dextrose. When glycerol is included, it is present in an amount between 0 and 5 weight percent, such as 1% or 2% glycerol.

As used herein, a "potent sweetener" means a sweetener which is at least twice as sweet as sugar, that is, a sweetener which on a weight basis requires no more than half the weight of sugar to achieve an equivalent sweetness. For example, a potent sweetener may require less than one-half the weight of sugar to achieve an equivalent sweetness in a beverage sweetened to a level of 10 degrees Brix with sugar. Potent sweeteners include both nutritive (e.g., Lo Han Guo juice concentrate) and non-nutritive sweeteners (e.g., typically, Lo Han Guo powder). In addition, potent sweeteners include both natural potent sweeteners (e.g., steviol glycosides, Lo Han Guo, etc.) and artificial potent sweeteners (e.g., neotame, etc.). However, for natural beverage products disclosed here, only natural potent sweeteners are employed. Commonly accepted potency figures for certain potent sweeteners include, for example,

| | |
|---|---|
| Cyclamate | 30 times as sweet as sugar |
| Stevioside | 100-250 times as sweet as sugar |
| Acesulfame-K | 200 times as sweet as sugar |
| Mogroside V | 100-300 times as sweet as sugar |
| Rebaudioside A | 150-300 times as sweet as sugar |
| Aspertame | 200 times as sweet as sugar |
| Saccharine | 300 times as sweet as sugar |
| Neohesperidin dihydrochalcone | 300 times as sweet as sugar |
| Sucralose | 600 times as sweet as sugar |
| Neotame | 8,000 times as sweet as sugar |

As used herein, a "non-nutritive sweetener" is one which does not provide significant caloric content in typical usage amounts, i.e., is one which imparts less than 5 calories per 8 oz. serving of beverage to achieve the sweetness equivalent of 10 Brix of sugar. As used herein, "reduced calorie beverage" means a beverage having at least a 25% reduction in calories per 8 oz. serving of beverage as compared to the full calorie version, typically a previously commercialized full-calorie version. As used herein, a "low-calorie beverage" has fewer than 40 calories per 8 oz. serving of beverage. Embodiments of beverage products according to the application comprise less than 40 calories per 240 ml of beverage product. As used herein, "zero-calorie" or "diet" means having less than 5 calories per serving, e.g., per 8 oz. for beverages.

Natural embodiments of the beverage products disclosed here are natural in that they do not contain anything artificial or synthetic (including any color additives regardless of source) that would not normally be expected to be in the food. As used herein, therefore, a "natural" beverage composition is defined in accordance with the following guidelines: Raw materials for a natural ingredient exists or originates in nature. Biological synthesis involving fermentation and enzymes can be employed, but synthesis with chemical reagents is not utilized. Artificial colors, preservatives, and flavors are not considered natural ingredients. Ingredients may be processed or purified through certain specified techniques including at least: physical processes, fermentation, and enzymolysis. Appropriate processes and purification techniques include at least: absorption, adsorption, agglomeration, centrifugation, chopping, cooking (baking, frying, boiling, roasting), cooling, cutting, chromatography, coating, crystallization, digestion, drying (spray, freeze drying, vacuum), evaporation, distillation, electrophoresis, emulsification, encapsulation, extraction, extrusion, filtration, fermentation, grinding, infusion, maceration, microbiological (rennet, enzymes), mixing, peeling, percolation, refrigeration/freezing, squeezing, steeping, washing, heating, mixing, ion exchange, lyophilization, osmose, precipitation, salting out, sublimation, ultrasonic treatment, concentration, flocculation, homogenization, reconstitution, enzymolysis (using enzymes found in nature). Processing aids (currently defined as substances used as manufacturing aids to enhance the appeal or utility of a food component, including clarifying agents, catalysts, flocculants, filter aids, and crystallization inhibitors, etc. See 21 CFR § 170.3(o)(24)) are considered incidental additives and may be used if removed appropriately.

Sweeteners suitable for use in various embodiments of the beverages disclosed herein include nutritive and non-nutritive, natural and artificial or synthetic sweeteners. Suitable sweeteners and combinations of sweeteners are selected for the desired nutritional characteristics, functional characteristics, taste profile for the beverage, mouthfeel and other organoleptic factors. Non-nutritive artificial sweeteners suitable for at least certain exemplary embodiments include, for example, peptide based sweeteners, e.g., aspartame, neotame, and alitame, and non-peptide based sweeteners, for example, sodium saccharin, calcium saccharin, acesulfame (including but not limited to acesulfame potassium), cyclamate (including but not limited to sodium cyclamate and/or calcium cyclamate), neohesperidin dihydrochalcone, and sucralose. Alitame may be less desirable for caramel-containing beverages where it has been known to form a precipitate. In certain exemplary embodiments the beverage product employs aspartame as the sweetener, either alone or with other sweeteners. In certain other exemplary embodiments the sweetener comprises aspartame and acesulfame potassium. Other non-nutritive sweeteners suitable for at least certain exemplary embodiments include, for example, sorbitol, mannitol, xylitol, glycyrrhizin, neohesperidin dihydrochalcone, D-tagatose, erythritol, meso-erythritol, malitol, maltose, lactose, fructo-oligosaccharides, Lo Han Guo powder, steviol glycosides, e.g., rebaudiosides such as Rebaudioside A, stevioside, etc., xylose, arabinose, isomalt, lactitol, maltitol, trehalulose, and ribose, and protein sweeteners such as monatin, thaumatin, monellin, brazzein, L-alanine and glycine related compounds and mixtures of any of them. Lo Han Guo, steviol glycosides, e.g., rebaudiosides such as Rebaudioside A, stevioside, etc. and related compounds, as discussed further below, are natural non-nutritive potent sweeteners. It will be within the ability of those skilled in the art, given the benefit of this disclosure, to select suitable non-nutritive sweeteners (e.g., one or combination of non-nutritive sweeteners, either alone or together with nutritive sweetener) for a particular embodiment of the beverage products disclosed here.

In at least certain exemplary embodiments of the beverages disclosed here, the sweetener component can include nutritive, natural crystalline or liquid sweeteners such as sucrose, liquid sucrose, fructose, liquid fructose, glucose, liquid glucose, leucrose, trehalose, glactose, isomaltulose, dextrose, maltodextrin, corn syrup solids, glucooligosaccharides, glucose-fructose syrup from natural sources such as apple, chicory, honey, etc., e.g., high fructose corn syrup, invert sugar, maple syrup, maple sugar, honey, brown sugar molasses, e.g., cane molasses, such as first molasses, second molasses, blackstrap molasses, and sugar beet molasses, sorghum syrup and/or others. Such sweeteners are present in at least certain exemplary embodiments in an amount of from about 0.1% to about 10% by weight of the beverage, such as from about 1% to about 4% by weight, depending upon the desired level of sweetness for the beverage. To achieve desired beverage uniformity, texture and taste, in certain exemplary embodiments of the natural beverage products disclosed here, standardized liquid sugars as are commonly employed in the beverage industry can be used. Typically such standardized sweeteners are free of traces of nonsugar solids which could adversely affect the flavor, color or consistency of the beverage.

The sweeteners are edible consumables suitable for consumption and for use in beverages. By "edible consumables" is meant a food or beverage or an ingredient of a food or beverage for human or animal consumption. The sweetener or sweetening agent used here and in the claims can be a nutritive or non-nutritive, natural or synthetic beverage ingredient or additive (or mixtures of them) which provides sweetness to the beverage, i.e., which is perceived as sweet by the sense of taste. The perception of flavoring agents and sweetening agents may depend to some extent on the interrelation of elements. Flavor and sweetness may also be perceived separately, i.e., flavor and sweetness perception may be both dependent upon each other and independent of each other. For example, when a large amount of a flavoring agent is used, a small amount of a sweetening agent may be readily perceptible and vice versa. Thus, the oral and olfactory interaction between a flavoring agent and a sweetening agent may involve the interrelationship of elements.

Non-nutritive, high potency sweeteners typically are employed at a level of milligrams per fluid ounce of beverage, according to their sweetening power, any applicable regulatory provisions of the country where the beverage is to be marketed, the desired level of sweetness of the beverage, etc. High potency sweeteners employed in certain embodiments of the beverage products are present in an amount between 0 weight percent and 0.04 weight percent. It will be within the ability of those skilled in the art, given the benefit of this disclosure, to select suitable additional or alternative sweeteners for use in various embodiments of the beverage products disclosed here.

As mentioned above, at least certain exemplary embodiments of the beverages disclosed here employ steviol glycosides, e.g., rebaudiosides such as Rebaudioside A, Rebaudioside D, stevioside, etc. or related compounds or mixtures of any of them for sweetening. These compounds can be obtained by extraction or the like from the stevia plant. Stevia (e.g., Stevia rebaudiana bertoni) is a sweet-tasting plant. The leaves contain a complex mixture of natural sweet diterpene glycosides. Steviol glycosides, e.g., rebaudiosides such as Rebaudioside A, stevioside, etc. are components of Stevia that contribute sweetness. Typically, these compounds are found to include stevioside (4-13% dry weight), steviolbioside (trace), the rebaudiosides, including rebaudioside A (2-4%), rebaudioside B (trace), rebaudioside C (1-2%), rebaudioside D (trace), and rebaudioside E (trace), and dulcoside A (0.4-0.7%). The following nonsweet constituents also have been identified in the leaves of stevia plants: labdane, diterpene, triterpenes, sterols, flavonoids, volatile oil constituents, pigments, gums and inorganic matter.

The sweetener Lo Han Guo, which has various different spellings and pronunciations and is abbreviated here in some instances as LHG, can be obtained from fruit of the plant family Cucurbitaceae, tribe Jollifieae, subtribe Thladianthinae, genus Siraitia. LHG often is obtained from the genus/species S. grosvenorii, S. siamensis, S. silomaradjae, S. sikkimensis, S. africana, S. borneensis, and S. taiwaniana. Suitable fruit includes that of the genus/species S. grosvenorii, which is often called Lo Han Guo fruit. LHG contains triterpene glycosides or mogrosides, which constituents may be used as LHG sweeteners. Lo Han Guo is a potent sweetener which can be provided as a natural nutritive or natural non-nutritive sweetener. For example, Lo Han Guo juice concentrate may be a nutritive sweetener, and Lo Han Guo powder may be a non-nutritive sweetener. Lo Han Guo can be used as the juice or juice concentrate, powder, etc. Preferably LHG juice contains at least about 0.1%, e.g., from 0.1% to about 15%, mogrosides, preferably mogroside V, mogroside IV, (11-oxo-mogroside V), siamenoside and mixtures thereof. LHG can be produced, for example, as discussed in U.S. patent No. 5,411,755. Sweeteners from other fruits, vegetables or plants also may be used as natural or processed sweeteners or sweetness enhancers in at least certain exemplary embodiments of the beverages disclosed.

Preservatives may be used in at least certain embodiments of the beverages disclosed here. That is, at least certain exemplary embodiments contain an optional dissolved preservative system. Solutions with a pH below 4 and especially those below 3 typically are "microstable," i.e., they resist growth of microorganisms, and so are suitable for longer term storage prior to consumption without the need for further preservatives. However, an additional preservative system can be used if desired. If a preservative system is used, it can be added to the beverage product at any suitable time during production, e.g., in some cases prior to the addition of the sweetener. As used here, the terms "preservation system" or "preservatives" include all suitable preservatives approved for use in food and beverage compositions, including, without limitation, such known chemical preservatives as benzoic acid, benzoates, e.g., sodium, calcium, and potassium benzoate, sorbates, e.g., sodium, calcium, and potassium sorbate, citrates, e.g., sodium citrate and potassium citrate, polyphosphates, e.g., sodium hexametaphosphate (SHMP), dimethyl dicarbonate, and mixtures thereof, and antioxidants such as ascorbic acid, EDTA, BHA, BHT, TBHQ, EMIQ, dehydroacetic acid, ethoxyquin, heptylparaben, and combinations thereof.

Preservatives can be used in amounts not exceeding mandated maximum levels under applicable laws and regulations. The level of preservative used typically is adjusted according to the planned final product pH, as well as an evaluation of the microbiological spoilage potential of the particular beverage formulation. The maximum level employed typically is about 0.05% by weight of the beverage. It will be within the ability of those skilled in the art, given the benefit of this disclosure, to select a suitable preservative or combination of preservatives for beverages according to this disclosure. In certain embodiments of the invention, benzoic acid or its salts (benzoates) may be employed as preservatives in the beverage products.

Other methods of beverage preservation suitable for at least certain exemplary embodiments of the beverage products disclosed here include, e.g., aseptic packaging and/or heat treatment or thermal processing steps, such as hot filling and tunnel pasteurization. Such steps can be used to reduce yeast, mold and microbial growth in the beverage products. For example, U.S. Patent No. 4,830,862 to Braun et al. discloses the use of pasteurization in the production of fruit juice beverages as well as the use of suitable preservatives in carbonated beverages. U.S. Patent No. 4,925,686 to Kastin discloses a heat-pasteurized freezable fruit juice composition which contains sodium benzoate and potassium sorbate. In general, heat treatment includes hot fill methods typically using high temperatures for a short time, e.g., about 190° F for 10 seconds, tunnel pasteurization methods typically using lower temperatures for a longer time, e.g., about 160° F for 10-15 minutes, and retort methods typically using, e.g., about 250° F for 3-5 minutes at elevated pressure, i.e., at pressure above 1 atmosphere.

The beverage products disclosed here optionally contain a flavor composition, for example, natural and synthetic fruit flavors, botanical flavors, other flavors, and mixtures thereof. In embodiments of the invention, flavors are present in an amount between 0 weight percent and 0.4 weight percent. As used here, the term "fruit flavor" refers generally to those flavors derived from the edible reproductive part of a seed plant. Included are both those wherein a sweet pulp is associated with the seed, e.g., banana, tomato, cranberry and the like, and those having a small, fleshy berry. The term berry also is used here to include aggregate fruits, i.e., not "true" berries, but that are commonly accepted as a berry. Also included within the term "fruit flavor" are synthetically prepared flavors made to simulate fruit flavors derived from natural sources. Examples of suitable fruit or berry sources include whole berries or portions thereof, berry juice, berry juice concentrates, berry purees and blends thereof, dried berry powders, dried berry juice powders, and the like.

Exemplary fruit flavors include the citrus flavors, e.g., orange, lemon, lime and grapefruit, and such flavors as apple, grape, cherry, and pineapple flavors and the like, and mixtures thereof. In certain exemplary embodiments the beverage concentrates and beverages comprise a fruit flavor component, e.g., a juice concentrate or juice. As used here, the term "botanical flavor" refers to flavors derived from parts of a plant other than the fruit. As such, botanical flavors can include those flavors derived from essential oils and extracts of nuts, bark, roots and leaves. Also included within the term "botanical flavor" are synthetically prepared flavors made to simulate botanical flavors derived from natural sources. Examples of such flavors include cola flavors, tea flavors, and the like, and mixtures thereof. The flavor component can further comprise a blend of various of the above-mentioned flavors. The particular amount of the flavor component useful for imparting flavor characteristics to the beverages of the present invention will depend upon the flavor(s) selected, the flavor impression desired, and the form of the flavor component. Those skilled in the art, given the benefit of this disclosure, will be readily able to determine the amount of any particular flavor component(s) used to achieve the desired flavor impression.

Other flavorings suitable for use in at least certain exemplary embodiments of the beverage products disclosed here include, e.g., spice flavorings, such as cassia, clove, cinnamon, pepper, ginger, vanilla spice flavorings, cardamom, coriander, root beer, sassafras, ginseng, and others. Numerous additional and alternative flavorings suitable for use in at least certain exemplary embodiments will be apparent to those skilled in the art given the benefit of this disclosure. Flavorings can be in the form of an extract, oleoresin, juice concentrate, bottler's base, or other forms known in the art. In at least certain exemplary embodiments, such spice or other flavors complement that of a juice or juice combination.

The one or more flavorings can be used in the form of an emulsion. A flavoring emulsion can be prepared by mixing some or all of the flavorings together, optionally together with other ingredients of the beverage, and an emulsifying agent. The emulsifying agent may be added with or after the flavorings mixed together. In certain exemplary embodiments the emulsifying agent is water-soluble. Exemplary suitable emulsifying agents include gum acacia, modified starch, carboxymethylcellulose, gum tragacanth, gum ghatti and other suitable gums. Additional suitable emulsifying agents will be apparent to those skilled in the art of beverage formulations, given the benefit of this disclosure. The emulsifier in exemplary embodiments comprises greater than about 3% of the mixture of flavorings and emulsifier. In certain exemplary embodiments the emulsifier is from about 5% to about 30% of the mixture.

The beverage concentrates and beverages disclosed here may contain additional ingredients, including, generally, any of those typically found in beverage formulations. These additional ingredients, for example, can typically be added to a stabilized beverage concentrate. Examples of such additional ingredients include, but are not limited to, caffeine, caramel and other coloring agents or dyes, antifoaming agents, gums, emulsifiers, tea solids and cloud components.

### EXAMPLES

### Example 1

A variety of sodium compounds were taste tested to determine the level of saltiness of a solution containing 500 mg sodium per 240 ml water. The compounds were ranked in order of comparative saltiness. The results are provided in Table 1 below, and sodium lactate provided the least salty taste. There is a general trend of the strength of the salty taste of these sodium compounds in which degree of saltiness is inversely related to compound size, however, there are exceptions. For instance, disodium phosphate, having a molecular weight of 142 g/mol, was ranked as less salty than the larger compound of sodium gluconate, which has a molecular weight of 219.5 g/mol.

**Table 1. Comparative saltiness of solutions of sodium compounds.**

| **Name** | **Chemical Formula** | **MW (g/mol)** | **% Na** | **wt (in g)= 500mgNa/ 240ml** | **Saltiness Rank (1=least)** |
|---|---|---|---|---|---|
| Sodium Chloride | NaCl | 58.5 | 39.4 | 1.27 | 6 |
| Sodium Lactate | CH3CHOHCOONa | 112.0 | 20.5 | 2.44 | 1 |
| Trisodium Citrate | C6H5Na3O7 | 258.0 | 26.7 | 1.87 | 2 |
| Sodium Gluconate | C6H11NaO7 | 219.5 | 10.5 | 4.76 | 4 |
| Monosodium Phosphate | NaH2PO4 | 120.0 | 19.1 | 2.62 | 5 |
| Disodium Phosphate | Na2HPO4 | 142.0 | 32.3 | 1.55 | 3 |
| Sodium Acid Sulfate | NaHSO4 | 120.0 | 19.2 | 2.60 | 7¹ |

| | | | | | |
|---|---|---|---|---|---|
| 1. The ranking of sodium acid sulfate as a 7 is due to its strong sour taste, rather than due to a strong salty taste. | | | | | |

### Example 2

A variety of potassium compounds were taste tested to determine the level of saltiness of a solution containing 500 mg potassium per 240 ml water. The compounds were ranked in order of comparative saltiness. The results are provided in Table 2 below, and potassium gluconate provided the least salty taste. Similar to the sodium compounds, the potassium compounds exhibited a trend of greater saltiness taste that was inversely proportional to compound size. An exception to the trend is potassium chloride, having a molecular weight of 74.6 g/mol, which did not taste as salty as monopotassium phosphate, which has a molecular weight of 136.1 g/mol.

**Table 2. Comparative saltiness of solutions of potassium compounds.**

| **Name** | **Chemical Formula** | **MW (g/mol)** | **% K** | **wt (in g)= 500mgK/240ml** | **Saltiness Rank (1=least)** |
|---|---|---|---|---|---|
| Potassium Gluconate¹ | CH2OH(CHOH)4COOK | 234.2 | 16.7 | 2.99 | 1 |
| Potassium Gluconate² | CH2OH(CHOH)4COOK | 234.2 | 16.7 | 2.99 | 2 |
| Potassium Sulfate | K2SO4 | 174.2 | 44.9 | 1.11 | 4 |
| Monopotassium Phosphate | KH2PO4 | 136.1 | 28.7 | 1.74 | 7 |
| Dipotassium Phosphate | K2HPO4 | 174.2 | 44.9 | 1.11 | 5 |
| Tripotassium Citrate | C6H5K3O7-H2O | 324.4 | 36.2 | 1.38 | 3 |
| Potassium Chloride | KCl | 74.6 | 52.4 | 0.95 | 6 |

| | | | | | |
|---|---|---|---|---|---|
| 1: The potassium gluconate source was Gluconal K-G - Purac. 2: The potassium gluconate source was American International Chemical. | | | | | |

### Example 3

A variety of chloride compounds were taste tested to determine the level of saltiness of a solution containing 100 mg chloride per 240 ml water. The compounds were ranked in order of comparative saltiness. The results are provided in Table 3 below, and potassium chloride provided the least salty taste. The chloride compounds did not exhibit the same saltiness trend inversely related to compound size as the potassium and sodium compounds, however, the chloride compounds were, overall, relatively close in size to each other.

**Table 3. Comparative saltiness of solutions of chloride compounds.**

| **Name** | **Chemical Formula** | **MW (g/mol)** | **% Cl** | **wt (in g)= 100mgCl/240 ml** | **Saltiness Rank (1=least)** |
|---|---|---|---|---|---|
| Magnesium Chloride hexahydrate | MgCl·6H20 | 167.8 | 21.1 | 0.47 | 3 |
| Potassium Choride | KCl | 74.6 | 47.5 | 0.21 | 1 |
| Sodium Chloride | NaCl | 58.5 | 60.6 | 0.16 | 4 |
| Calcium Chloride - Anhydrous | CaCl2 | 111.0 | 63.9 | 0.16 | 2 |

### Example 4

Sensory characteristics were tested for aqueous solutions of various electrolyte blends, by a trained sensory panel. As used herein, the term "trained sensory panel" refers to a group of at least eight people who have been trained to evaluate one or more specific sensory characteristics within a defined numerical scale. The numerical scale ranged from zero to fifteen, where a salty taste of a 0.70 weight % solution of sodium chloride in water equals 15 on the scale and a salty taste of water subjected to reverse osmosis ("r-o water") equals 0 on the scale. The uncertainty of the numerical results is typically ± 0.1.

The reference solutions employed to train the panelists are provided in Table 4 below. The salty taste attributes of individual electrolyte compounds (containing 110 mg sodium, 20 mg potassium or 90 mg chloride), as determined by the trained sensory panel, are provided in Table 5 below.

**Table 4 Reference solutions and salty scale for training sensory panel participants.**

| **Salty Scale** | **Reference Solution** | **Sodium Chloride (grams)** | **Water (grams)** |
|---|---|---|---|
| 0 | 0.0 % | 0.0 | 100.0 |
| 2 | 0.20 % | 2.0 | 998.0 |
| 5 | 0.35 % | 3.5 | 996.5 |
| 10 | 0.55 % | 5.5 | 994.5 |
| 15 | 0.70 % | 7.0 | 993.0 |

**Table 5. Trained sensory panel determination of the salty tastes of individual electrolyte solutions providing specific amounts of electrolytes.**

| **Electrolyte** | **Element Provided (in 240 mL water)** | **Salty Attribute** |
|---|---|---|
| Disodium Phosphate | 110 mg Sodium | 1.6 |
| Sodium Chloride | 90 mg Chloride | 1.4 |
| Sodium Chloride | 110 mg Chloride | 1.8 |
| Sodium Citrate | 110 mg Sodium | 0.8 |
| Sodium Gluconate | 110 mg Sodium | 0.9 |
| Sodium Lactate | 110 mg Sodium | 1.1 |
| Tetrasodium Acid Pyrophosphate | 110 mg Sodium | 1.1 |
| Dipotassium Phosphate | 20 mg Potassium | 0.8 |
| Monopotassium Phosphate | 20 mg Potassium | 0.8 |
| Potassium Chloride | 110 mg Chloride | 0.7 |
| Potassium Chloride | 20 mg Potassium | 0.7 |
| Potassium Gluconate | 20 mg Potassium | 1.1 |
| Potassium Sulfate | 20 mg Potassium | 0.7 |

As can been seen in Table 5 above, a variety of potassium compounds were taste tested to determine the level of saltiness of a solution containing 20 mg potassium per 240 ml of water, which is 25 times less than the 500 mg potassium per 240 ml water of potassium compounds ranked according to saltiness in Table 2 above. It was unexpectedly discovered that the relative rankings of the potassium compounds at the two different potassium levels were very different. For ease of comparison, comparative saltiness rankings at the two potassium levels are shown below in Table 6 for each compound for which both potassium levels were tested. For instance, potassium gluconate at a level of 500 mg potassium per 240 ml water was ranked as the least salty of all of the potassium compounds, whereas potassium gluconate was the most salty of all of the potassium compounds at a level of 20 mg potassium per 240 ml water. Consequently, it was discovered that the concentration of an electrolyte is critical to its relative salty taste.

**Table 6. Comparative saltiness of solutions of potassium compounds, at two potassium levels.**

| **Name** | **Chemical Formula** | **Saltiness Rank at 500 mg K / 240 ml (1=least)** | **Saltiness Rank at 20 mg K / 240 ml (1=least)** |
|---|---|---|---|
| Potassium Gluconate | CH2OH(CHOH)4COOK | 1 | 5 |
| Potassium Sulfate | K2SO4 | 2 | 1 |
| Monopotassium Phosphate | KH2PO4 | 5 | 3 |
| Dipotassium Phosphate | K2HPO4 | 3 | 3 |
| Potassium Chloride | KCl | 4 | 1 |

As can been seen in Table 5 above, a variety of sodium compounds were taste tested to determine the level of saltiness of a solution containing 110 mg potassium per 240 ml of water, which is 4.5 times less than the 500 mg potassium per 240 ml water of sodium compounds ranked according to saltiness in Table 1 above. It was unexpectedly discovered that the relative rankings of the sodium compounds at the two different sodium levels were different. For ease of comparison, comparative saltiness rankings at the two potassium levels are shown below in Table 7 for each compound for which both sodium levels were tested. For instance, sodium lactate at a level of 500 mg sodium per 240 ml water was ranked as the least salty of all of the sodium compounds, whereas sodium lactate was the third saltiest of all of the sodium compounds at a level of 110 mg potassium per 240 ml water. Only sodium chloride maintained its same relative saltiness ranking in both concentrations. Consequently, it was discovered that the concentration of an electrolyte is critical to its relative salty taste.

**Table 7. Comparative saltiness of solutions of sodium compounds, at two sodium levels.**

| **Name** | **Chemical Formula** | **Saltiness Rank at 500 mg Na / 240 ml (1=least)** | **Saltiness Rank at 110 mg Na / 240 ml (1=least)** |
|---|---|---|---|
| Sodium Chloride | NaCl | 5 | 5 |
| Sodium Lactate | CH3CHOHCOONa | 1 | 3 |
| Trisodium Citrate | C6H5Na3O7 | 2 | 1 |
| Sodium Gluconate | C6H11NaO7 | 4 | 2 |
| Disodium Phosphate | Na2HPO4 | 3 | 4 |

### Example 5

The sensory attribute of salty taste was tested for aqueous solutions of various electrolyte blends, by a trained sensory panel. The numerical scale ranged from zero to fifteen, where a salty taste of a 0.70 weight % solution of sodium chloride in water equals 15 on the scale and a salty taste of water equals 0 on the scale.

As can be determined from the sensory test results presented in Table 8 above, the salty taste of an electrolyte blend is not predictable from the magnitude of salty taste provided by each individual electrolyte. For example, in Table 6 above it is shown that potassium sulfate was ranked as the least salty of the potassium compounds at a level of 20 mg potassium per 240 ml water, while potassium gluconate was ranked as the most salty of the potassium compounds at that same concentration; however, Blends 2 and 3 in Table 8, which differed only in the presence of potassium gluconate versus potassium sulfate, respectively, exhibited the same salty taste, namely 1.3, as determined by the trained sensory panel.

Moreover, dipotassium phosphate was ranked as having a higher salty taste than potassium sulfate at a level of 20 mg potassium per 240 ml water; however, Blend 4 (containing dipotassium phosphate) exhibited a salty taste of only 0.9, which was lower than that of Blend 3, which differed only in containing potassium sulfate instead of dipotassium phosphate. Accordingly, the salty taste attribute of an individual electrolyte compound is not necessarily predictive of a salty taste attribute of an electrolyte blend containing the electrolyte compound.

**Table 8. Trained sensory panel determination of the salty taste of electrolyte blends, each providing 110 mg sodium 20 mg potassium, and 90 mg chloride in 240 ml water.**

| **Blend #** | **Electrolyte Blend** | **Salty Attribute** |
|---|---|---|
| 1 | Sodium Chloride / Disodium Phosphate / Monopotassium Phosphate | 1.2 |
| 2 | Sodium Chloride / Disodium Phosphate / Potassium Gluconate | 1.3 |
| 3 | Sodium Chloride / Disodium Phosphate / Potassium Sulfate | 1.3 |
| 4 | Sodium Chloride / Disodium Phosphate / Dipotassium Phosphate | 0.9 |
| 5 | Sodium Chloride / Sodium Gluconate / Dipotassium Phosphate | 1.4 |
| 6 | Sodium Chloride / Sodium Gluconate / Monopotassium Phosphate | 1.1 |
| 7 | Sodium Chloride / Sodium Gluconate / Potassium Gluconate | 1.2 |
| 8 | Sodium Chloride / Sodium Gluconate / Potassium Sulfate | 1.1 |
| 9 | Sodium Chloride / Sodium Lactate / Dipotassium Phosphate | 1.2 |
| 10 | Sodium Chloride / Sodium Lactate / Monopotassium Phosphate | 1.0 |
| 11 | Sodium Chloride / Sodium Lactate / Potassium Gluconate | 1.2 |
| 12 | Sodium Chloride / Sodium Lactate / Potassium Sulfate | 1.1 |
| 13 | Sodium Chloride / Tetrasodium Acid Pyrophosphate / Dipotassium Phosphate | 1.6 |
| 14 | Sodium Chloride / Tetrasodium Acid Pyrophosphate / Monopotassium Phosphate | 1.1 |
| 15 | Sodium Chloride / Tetrasodium Acid Pyrophosphate / Potassium Gluconate | 1.2 |
| 16 | Sodium Chloride / Tetrasodium Acid Pyrophosphate / Potassium Sulfate | 1.3 |
| 17 | Sodium Chloride / Sodium Citrate / Dipotassium Phosphate | 1.4 |
| 18 | Sodium Chloride / Sodium Citrate / Monopotassium Phosphate (Electrolyte Blend as in Gatorade®) | 1.2 |
| 19 | Sodium Chloride / Sodium Citrate / Potassium Gluconate | 0.9 |
| 20 | Sodium Chloride / Sodium Citrate / Potassium Sulfate | 1.3 |
| 21 | Sodium Chloride / Sodium Citrate / Monopotassium Phosphate (Electrolyte Blend as in Gatorade®) | 1.1 |

### Example 6

Sensory characteristics were tested for various commercially available rehydration beverages by a trained sensory panel. The sensory panel comprised nine members, who evaluated the beverages for thirty-eight individual taste attributes. The taste attributes included total aromatic impact, salty, sweet, sour and bitter, and two replicates were evaluated for each attribute. The numerical scale for each taste attribute ranged from zero to fifteen. Regarding the salty taste attribute, a salty taste of a 0.70 weight % solution of sodium chloride in water equals 15 on the scale and a salty taste of water equals 0 on the scale.

The specific beverages tested and the taste attributes evaluated are provided in Table 9 below.

**Table 9. Taste attributes of solutions of commercially available rehydration beverages, on a scale of 0 to 15 as determined by a trained sensory panel.**

| | Gatorade® Fruit Punch | Powerade® Fruit Punch | Gatorade® Lemon Lime | Powerade® Lemon Lime | Gatorade® Orange | Powerade® Orange |
|---|---|---|---|---|---|---|
| Salty | 1.6 | 1.5 | 1.8 | 1.9 | 1.9 | 1.8 |
| Sweet | 5.8 | 5.4 | 5.3 | 5.3 | 5.5 | 5.3 |
| Bitter | 1.7 | 1.9 | 1.6 | 1.9 | 1.5 | 1.5 |
| Sour | 4.0 | 4.0 | 3.9 | 4.1 | 4.1 | 3.9 |
| Total Aromatic Impact | 8.4 | 8.5 | 8.2 | 8.0 | 8.3 | 7.9 |

Surprisingly, the presence of ingredients in addition to the electrolyte blends resulted in a higher salty taste ranking than at least some of the same electrolyte blends dissolved in plain water. This is illustrated with a comparison between the salty taste attribute of the electrolyte blend present in Gatorade® dissolved in water, which exhibited a salty taste of 1.1 (See Blends 18 and 22 in Table 8 above), as opposed to the salty taste attribute of Gatorade® Lemon Lime, Gatorade® Fruit Punch, and Gatorade® Orange, which exhibited a salty taste of 1.8, 1.6 and 1.9, respectively (See Table 9 above). Without wishing to be bound by theory, it is believed that the presence of sweeteners and acids enhances the salty taste of the electrolyte blends to result in a more salty tasting composition.

### Example 7

An electrolyte blend was prepared according to the present invention, comprising sodium lactate, potassium gluconate and anhydrous calcium chloride. The electrolyte blend was then dissolved in water to form a zero calorie rehydration beverage composition. The particular ingredients and the weight percent of each ingredient included in the rehydration beverage composition are listed below in Table 10. The prepared rehydration beverage composition contained 110 mg sodium, 30 mg potassium, and 90 mg chloride per 240 ml beverage volume.

**Table 10. Formulation for a rehydration beverage composition containing an electrolyte blend according to Example 7.**

| **Ingredient** | **Weight % in the Beverage Composition** |
|---|---|
| Water | 99.6424 |
| Sodium Lactate | 0.2238 |
| Potassium Gluconate | 0.0750 |
| Calcium Chloride (anhydrous) | 0.0588 |

### Example 8

An electrolyte blend was prepared according to the present invention, comprising sodium lactate, potassium gluconate and anhydrous calcium chloride. Carbohydrates were also included in the electrolyte blend. The blend was then dissolved in water to form a rehydration beverage composition comprising 3% by weight carbohydrates. The particular ingredients and the weight percent of each ingredient included in the rehydration beverage composition are listed below in Table 11. The prepared rehydration beverage composition contained 110 mg sodium, 30 mg potassium, and 90 mg chloride per 240 ml beverage volume.

**Table 11. Formulation for a rehydration beverage composition containing an electrolyte blend according to Example 8.**

| **Ingredient** | **Weight % in the Beverage Composition** |
|---|---|
| Water | 96.3425 |
| Maltodextrin | 1.5718 |
| Isomaltulose | 1.3056 |
| Dextrose | 0.4225 |
| Sodium Lactate | 0.2238 |
| Potassium Gluconate | 0.0750 |
| Calcium Chloride (anhydrous) | 0.0588 |

### Example 9

An electrolyte blend was prepared according to the present invention, comprising sodium lactate, potassium gluconate and anhydrous calcium chloride. Carbohydrates were also included in the electrolyte blend. The blend was then dissolved in water to form a rehydration beverage composition comprising 6% by weight carbohydrates. The particular ingredients and the weight percent of each ingredient included in the rehydration beverage composition are listed below in Table 12. The prepared rehydration beverage composition contained 110 mg sodium, 30 mg potassium, and 90 mg chloride per 240 ml beverage volume.

**Table 12. Formulation for a rehydration beverage composition containing an electrolyte blend according to Example 9.**

| **Ingredient** | **Weight % in the Beverage Composition** |
|---|---|
| Water | 93.0425 |
| Maltodextrin | 3.1437 |
| Isomaltulose | 2.6113 |
| Dextrose | 0.8451 |
| Sodium Lactate | 0.2238 |
| Potassium Gluconate | 0.0750 |
| Calcium Chloride (anhydrous) | 0.0588 |

### Example 10

An electrolyte blend was prepared according to the present invention, comprising sodium lactate and potassium chloride. The electrolyte blend was then dissolved in water to form a zero calorie rehydration beverage composition. The particular ingredients and the weight percent of each ingredient included in the rehydration beverage composition are listed below in Table 13. The prepared rehydration beverage composition contained 110 mg sodium, 30 mg potassium, and 90 mg chloride per 240 ml beverage volume.

**Table 13. Formulation for a rehydration beverage composition containing an electrolyte blend according to Example 10.**

| **Ingredient** | **Weight % in the Beverage Composition** |
|---|---|
| Water | 99.6974 |
| Sodium Lactate | 0.2238 |
| Potassium Chloride | 0.0788 |

### Example 11

An electrolyte blend was prepared according to the present invention, comprising sodium lactate and potassium chloride. Carbohydrates were also included in the electrolyte blend. The blend was then dissolved in water to form a rehydration beverage composition comprising 3% by weight carbohydrates. The particular ingredients and the weight percent of each ingredient included in the rehydration beverage composition are listed below in Table 14. The prepared rehydration beverage composition contained 110 mg sodium, 30 mg potassium, and 90 mg chloride per 240 ml beverage volume.

**Table 14. Formulation for a rehydration beverage composition containing an electrolyte blend according to Example 11.**

| **Ingredient** | **Weight % in the Beverage Composition** |
|---|---|
| Water | 96.3975 |
| Maltodextrin | 1.5718 |
| Isomaltulose | 1.3056 |
| Dextrose | 0.4225 |
| Sodium Lactate | 0.2238 |
| Potassium Chloride | 0.0788 |

### Example 12

An electrolyte blend was prepared according to the present invention, comprising sodium lactate and potassium chloride. Carbohydrates were also included in the electrolyte blend. The blend was then dissolved in water to form a rehydration beverage composition comprising 6% by weight carbohydrates. The particular ingredients and the weight percent of each ingredient included in the rehydration beverage composition are listed below in Table 15. The prepared rehydration beverage composition contained 110 mg sodium, 30 mg potassium, and 90 mg chloride per 240 ml beverage volume.

**Table 15. Formulation for a rehydration beverage composition containing an electrolyte blend according to Example 12.**

| **Ingredient** | **Weight % in the Beverage Composition** |
|---|---|
| Water | 93.0975 |
| Maltodextrin | 3.1437 |
| Isomaltulose | 2.6113 |
| Dextrose | 0.8451 |
| Sodium Lactate | 0.2238 |
| Potassium Chloride | 0.0788 |

### Example 13

An electrolyte blend was prepared according to the present invention, comprising sodium chloride, sodium gluconate and monopotassium phosphate. The electrolyte blend was then dissolved in water to form a zero calorie rehydration beverage composition. The particular ingredients and the weight percent of each ingredient included in the rehydration beverage composition are listed below in Table 16. The prepared rehydration beverage composition contained 110 mg sodium, 30 mg potassium, and 90 mg chloride per 240 ml beverage volume.

**Table 16. Formulation for a rehydration beverage composition containing an electrolyte blend according to Example 13.**

| **Ingredient** | **Weight % in the Beverage Composition** |
|---|---|
| Water | 99.7127 |
| Sodium Chloride | 0.0659 |
| Sodium Gluconate | 0.1775 |
| Monopotassium Phosphate | 0.0439 |

### Example 14

An electrolyte blend was prepared according to the present invention, comprising sodium chloride, sodium acid sulfate, trisodium citrate and monopotassium phosphate. Carbohydrates were also included in the electrolyte blend. The blend was then dissolved in water to form a rehydration beverage composition comprising 3% by weight carbohydrates. The particular ingredients and the weight percent of each ingredient included in the rehydration beverage composition are listed below in Table 17. The prepared rehydration beverage composition contained 110 mg sodium, 30 mg potassium, and 90 mg chloride per 240 ml beverage volume.

**Table 17. Formulation for a rehydration beverage composition containing an electrolyte blend according to Example 14.**

| **Ingredient** | **Weight % in the Beverage Composition** |
|---|---|
| Water | 96.5062 |
| Maltodextrin | 1.5718 |
| Isomaltulose | 1.3056 |
| Dextrose | 0.4225 |
| Sodium Chloride | 0.0659 |
| Sodium Acid Sulfate | 0.0474 |
| Trisodium Citrate | 0.0365 |
| Monopotassium Phosphate | 0.0439 |

### Example 15

An electrolyte blend was prepared according to the present invention, comprising sodium chloride, sodium acid sulfate, trisodium citrate and monopotassium phosphate. Carbohydrates were also included in the electrolyte blend. The blend was then dissolved in water to form a rehydration beverage composition comprising 6% by weight carbohydrates. The particular ingredients and the weight percent of each ingredient included in the rehydration beverage composition are listed below in Table 18. The prepared rehydration beverage composition contained 110 mg sodium, 30 mg potassium, and 90 mg chloride per 240 ml beverage volume.

**Table 18. Formulation for a rehydration beverage composition containing an electrolyte blend according to Example 15.**

| **Ingredient** | **Weight % in the Beverage Composition** |
|---|---|
| Water | 93.2062 |
| Maltodextrin | 3.1437 |
| Is omaltulose | 2.6113 |
| Dextrose | 0.8451 |
| Sodium Chloride | 0.0659 |
| Sodium Acid Sulfate | 0.0474 |
| Trisodium Citrate | 0.0365 |
| Monopotassium Phosphate | 0.0439 |

### Example 16

Three electrolyte blends were prepared for use in a rehydration/sports beverage according to the present invention. The electrolyte blends contained sodium chloride, sodium lactate and monopotassium phosphate in varying ratios. In particular, the different amounts are listed below in Table 19.

**Table 19. Various electrolyte blends providing 110 mg Na and 30 mg K per eight ounce serving, according to Example 16.**

| **Ingredient** | **Milligrams Electrolyte - Sample 1** | **Milligrams Electrolyte - Sample 2** | **Milligrams Electrolyte - Sample 3** |
|---|---|---|---|
| Sodium Chloride | 80 mg Na | 55 mg Na | 30 mg Na |
| Sodium Lactate | 30 mg Na | 55 mg Na | 80 mg Na |
| Monopotassium Phosphate | 30 mg K | 30 mg K | 30 mg K |

The electrolyte blend of Sample 1 was selected for inclusion into a rehydration beverage having 110 mg sodium and 30 mg potassium per 8 ounce serving because the blend contains the least amount of sodium lactate. This is significant because sodium lactate acts as a pH buffer, thus the less sodium lactate present, the less acidulant needed to achieve a target pH of approximately 3.7 in the rehydration beverage.

A beverage composition was prepared using the electrolyte blend according to Sample 1. The electrolyte blend contained sodium chloride, sodium lactate and monopotassium phosphate. Carbohydrates, a non-nutritive sweetener, and acidulants were also included in the rehydration beverage composition. The particular ingredients and the ranges of weight percents of each ingredient included in the rehydration beverage composition are listed below in Table 20. The prepared rehydration beverage composition contained 20 calories per 8 ounces beverage volume. Taste testing of the beverage of Example 16 showed that the inventive rehydration beverage exhibited a light taste, i.e., less salty taste and less aftertaste, as compared to a Gatorade® Thirst Quencher rehydration beverage.

**Table 20. Formulation for a rehydration beverage composition containing an electrolyte blend according to Example 16.**

| **Ingredient** | **Weight % in the Beverage Composition** |
|---|---|
| Water | 97.54 - 97.60 |
| Sodium Chloride | 0.0846 |
| Sodium Lactate | 0.0610 |
| Monopotassium Phosphate | 0.0436 |
| Sucrose | 0 - 1.6 |
| Isomaltulose | 0 - 2.0 |
| Rebaudioside A | 0.0035 - 0.0175 |
| Citric Acid | 0.04 - 0.08 |
| Lactic Acid (88%) | 0.018 - 0.036 |
| Flavor | 0.15 |

### Example 17

Consumer sensory tests were performed for aqueous solutions of two rehydration beverages, to determine consumer evaluation and liking of the rehydration beverages. The ingredients for the rehydration beverages tested are provided in Table 20 above, the carbohydrate and sweetener amounts selected such that one beverage comprised zero calories per 240 ml and one beverage comprised ten calories per 240 ml. Over 70% of the consumers thought that both of the rehydration beverages tasted had the right amount of saltiness, about 70% thought that both of the rehydration beverages had either no aftertaste or a good aftertaste, and over 50% thought that both of the rehydration beverages had just the right sweetness/tartness balance. Both of the rehydration beverages were rated by the consumers as having a rating for the attribute of refreshing of at least 3.4 on a scale of 1 to 5, with 5 being the most refreshing.

### Example 18

Sensory characteristics are tested for aqueous solutions of two rehydration beverages, by a trained sensory panel. The numerical scale ranges from zero to fifteen, where a salty taste of a 0.70 weight % solution of sodium chloride in water equals 15 on the scale and a salty taste of water equals 0 on the scale.

The ingredients for the rehydration beverages tested are provided in Table 20 above, the carbohydrate and sweetener amounts selected such that one beverage comprises zero calories per 240 ml and one beverage comprises ten calories per 240 ml. The salty taste attribute for each of the zero calorie and 10 calorie rehydration beverages is less than 1.5, or less than 1.4, or less than that of the same beverages in which the electrolyte blend consists of sodium chloride, sodium citrate, and potassium phosphate in amounts that provide the same milligrams per serving of sodium, potassium and chloride.

### Example 19

Sensory characteristics were tested for the zero calorie rehydration beverage of Example 16 by a trained sensory panel. The sensory panel comprised thirteen members, who evaluated the beverages for thirty-eight individual taste attributes. The taste attributes included total aromatic impact, salty, sweet, sour and bitter, as well as aftertaste (AFT) taste attributes of high intensity sweetener (HIS) aromatic, sweet, sour and bitter. Two replicates were evaluated for each attribute. The numerical scale for each taste attribute ranged from zero to fifteen. Regarding the salty taste attribute, a salty taste of a 15 weight % solution of sodium chloride in water equals 15 on the scale and a salty taste of r-o water equals 0 on the scale. The evaluation of the taste attributes are provided in Table 21 below.

**Table 21. Taste attributes of solutions of the rehydration beverage compositions of Example 16, on a scale of 0 to 15, as determined by a trained sensory panel.**

| | **1** | **2** | **3** | **4** | **5** | **6** | **7** | **8** | **9** | **10** | **11** | **12** | **13** |
|---|---|---|---|---|---|---|---|---|---|---|---|---|---|
| Salty | 1.4 | 1.4 | 1.5 | 1.4 | 1.3 | 1.2 | 1.3 | 1.3 | 1.4 | 1.3 | 1.4 | 1.3 | 1.1 |
| Sweet | 2.3 | 3.0 | 2.4 | 2.2 | 3.8 | 3.7 | 3.1 | 3.8 | 3.1 | 3.9 | 2.5 | 2.4 | 3.6 |
| Bitter | 1.5 | 1.7 | 1.7 | 1.6 | 1.7 | 1.7 | 1.5 | 1.6 | 1.5 | 1.6 | 1.7 | 1.7 | 1.7 |
| Sour | 2.6 | 2.7 | 2.9 | 2.7 | 2.6 | 2.6 | 2.6 | 2.7 | 2.5 | 2.7 | 2.8 | 2.6 | 2.5 |
| Total Aromatic Impact | 4.5 | 5.1 | 4.5 | 4.3 | 5.8 | 5.7 | 5.1 | 6.0 | 5.0 | 6.0 | 4.3 | 4.3 | 5.7 |
| HIS Aromatic | 0.9 | 1.3 | 1.0 | 0.9 | 1.4 | 1.2 | 1.1 | 1.3 | 1.1 | 1.2 | 0.9 | 0.9 | 1.3 |
| AFT Sweet | 0.5 | 1.2 | 0.4 | 0.4 | 1.4 | 1.2 | 1.1 | 1.3 | 1.0 | 1.3 | 0.5 | 0.6 | 1.3 |
| AFT Sour | 1.1 | 1.1 | 1.3 | 1.1 | 1.0 | 0.8 | 0.9 | 0.9 | 0.8 | 0.9 | 1.0 | 1.0 | 0.9 |
| AFT Bitter | 1.1 | 1.1 | 1.2 | 1.3 | 1.1 | 1.1 | 1.1 | 1.2 | 1.1 | 1.1 | 1.1 | 1.2 | 0.9 |

### Example 20

A beverage composition was prepared using the electrolyte blend according to Sample 1. The electrolyte blend contained sodium chloride, sodium lactate and monopotassium phosphate. A non-nutritive sweetener and acidulants were also included in the rehydration beverage composition. The particular ingredients and the ranges of weight percents of each ingredient included in the rehydration beverage composition are listed below in Table 22. The prepared rehydration beverage composition contained zero calories per 8 ounces beverage volume. Taste testing of the beverage of Example 16 showed that the inventive rehydration beverage exhibited a light taste, i.e., less salty taste and less aftertaste, as compared to a Gatorade® Thirst Quencher rehydration beverage.

**Table 22. Formulation for a rehydration beverage composition containing an electrolyte blend according to Example 16.**

| **Ingredient** | **Weight % in the Beverage Composition** |
|---|---|
| Water | 99.54 - 97.58 |
| Sodium Chloride | 0.0846 |
| Sodium Lactate | 0.0610 |
| Monopotassium Phosphate | 0.0436 |
| Rebaudioside A | 0.005 - 0.0175 |
| Citric Acid | 0.04-0.08 |
| Lactic Acid (88%) | 0.018 - 0.036 |
| Flavor | 0.15 |

### Example 21

Sensory characteristics were tested for the ten calorie rehydration beverage of Example 16 by a trained sensory panel. The sensory panel comprised seventeen members, who evaluated the beverages for thirty-eight individual taste attributes. The taste attributes included total aromatic impact, salty, sweet, sour and bitter, as well as aftertaste (AFT) taste attributes of high intensity sweetener (HIS) aromatic, sweet, sour and bitter. Two replicates were evaluated for each attribute. The numerical scale for each taste attribute ranged from zero to fifteen. Regarding the salty taste attribute, a salty taste of a 15 weight % solution of sodium chloride in water equals 15 on the scale and a salty taste of r-o water equals 0 on the scale. The evaluation of the taste attributes are provided in Table 23 below.

**Table 23. Taste attributes of solutions of the rehydration beverage compositions of Example 16, on a scale of 0 to 15, as determined by a trained sensory panel.**

| | Salty | Sweet | Bitter | Sour | Total Aromatic Impact | HIS Arom atic | AFT Sweet | AFT Sour | AFT Bitter |
|---|---|---|---|---|---|---|---|---|---|
| **1** | 1.5 | 2.3 | 1.5 | 2.5 | 5.2 | 1.2 | 0.5 | 0.6 | 1.0 |
| **2** | 1.6 | 2.5 | 1.8 | 2.6 | 5.6 | 1.0 | 0.7 | 0.8 | 1.3 |
| **3** | 1.6 | 2.6 | 1.7 | 2.3 | 5.7 | 1.0 | 0.8 | 0.7 | 1.0 |
| **4** | 1.5 | 3.0 | 1.9 | 2.8 | 5.6 | 1.1 | 0.9 | 0.8 | 1.1 |
| **5** | 1.4 | 2.7 | 1.6 | 2.2 | 5.7 | 0.9 | 0.9 | 0.6 | 0.9 |
| **6** | 1.5 | 3.3 | 1.7 | 2.5 | 5.8 | 1.0 | 0.8 | 0.5 | 1.2 |
| **7** | 1.5 | 3.3 | 1.6 | 2.3 | 6.0 | 1.2 | 1.1 | 0.6 | 1.0 |
| **8** | 1.4 | 3.2 | 1.7 | 2.6 | 5.9 | 1.4 | 1.1 | 0.9 | 1.1 |
| **9** | 1.5 | 3.1 | 1.7 | 2.5 | 6.2 | 1.0 | 1.1 | 0.9 | 1.0 |
| **10** | 1.5 | 2.9 | 1.5 | 2.1 | 5.8 | 1.0 | 0.9 | 0.8 | 1.0 |
| **11** | 1.6 | 3.1 | 1.6 | 2.4 | 5.9 | 1.1 | 1.1 | 1.0 | 1.2 |
| **12** | 1.5 | 3.2 | 1.7 | 2.2 | 5.8 | 1.3 | 1.0 | 0.5 | 1.0 |
| **13** | 1.4 | 3.6 | 1.6 | 2.3 | 6.0 | 1.2 | 1.1 | 0.7 | 1.0 |
| **14** | 1.5 | 3.6 | 1.6 | 2.3 | 6.2 | 1.1 | 1.0 | 0.5 | 1.0 |
| **15** | 1.5 | 3.2 | 1.5 | 2.2 | 5.9 | 1.0 | 0.9 | 0.5 | 1.0 |
| **16** | 1.4 | 2.8 | 1.7 | 2.4 | 6.0 | 1.2 | 1.0 | 0.8 | 1.1 |
| **17** | 1.6 | 2.9 | 1.6 | 2.2 | 5.8 | 1.0 | 1.0 | 0.6 | 1.1 |

### Example 22

A rehydration powder was prepared comprising sodium lactate, the sodium compound having the lowest saltiness rank (at 500 mg sodium per 240 ml water), potassium gluconate, the potassium compound having the lowest saltiness rank (at 500 mg potassium per 240 ml water), and calcium chloride anhydrous, which ranked second lowest in saltiness of the chloride compounds (at 500 mg chloride per 240 ml water). The particular electrolytes and weight of each ingredient in the powder and added to 240 ml water to form a rehydration beverage composition, are listed below in Table 24. The prepared rehydration beverage composition contained zero calories.

**Table 24. Formulation for a rehydration beverage composition containing an electrolyte blend according to Example 22.**

| **Ingredient** | **Weight in 240 ml Water (grams)** |
|---|---|
| Sodium Lactate | 0.537 |
| Potassium Gluconate | 0.018 |
| Calcium Chloride (anhydrous) | 0.141 |

### Example 23

A rehydration powder was prepared comprising sodium lactate, the sodium compound having the lowest saltiness rank (at 500 mg sodium per 240 ml water), and potassium chloride, the chloride compound having the lowest saltiness rank (at 500 mg chloride per 240 ml water). The particular electrolytes and weight of each ingredient in the powder and added to 240 ml water to form a rehydration beverage composition, are listed below in Table 25. The prepared rehydration beverage composition contained zero calories.

**Table 25. Formulation for a rehydration beverage composition containing an electrolyte blend according to Example 23.**

| **Ingredient** | **Weight in 240 ml Water (grams)** |
|---|---|
| Sodium Lactate | 0.537 |
| Potassium Chloride | 0.189 |

### Example 24

A beverage composition was prepared using an electrolyte blend containing sodium chloride, sodium lactate, potassium citrate and potassium chloride. A non-nutritive sweetener and acidulants were also included in the rehydration beverage composition. The particular ingredients and the ranges of weight percents of each ingredient included in the rehydration beverage composition are listed below in Table 26. The prepared rehydration beverage composition contained zero calories per 8 ounces beverage volume. Taste testing of the beverage of Example 24 showed that the inventive rehydration beverage exhibited a light taste, i.e., less salty taste and less aftertaste, as compared to a Gatorade® Thirst Quencher rehydration beverage.

**Table 26. Formulation for a rehydration beverage composition containing an electrolyte blend according to Example 24**

| **Ingredient** | **Weight % in the Beverage Composition** |
|---|---|
| Water | 99.58 |
| Sodium Chloride | 0.0846 |
| Sodium Lactate | 0.0610 |
| Potassium Citrate | 0.0436 |
| Potassium Chloride | 0.0119 |
| Rebaudioside A | 0.0155 |
| Citric Acid | 0.04 |
| Lactic Acid (88%) | 0.036 |
| Flavor | 0.15 |

### Example 25

A beverage composition was prepared using an electrolyte blend containing sodium chloride, sodium lactate, potassium citrate and potassium chloride. A non-nutritive sweetener and acidulants were also included in the rehydration beverage composition. The particular ingredients and the ranges of weight percents of each ingredient included in the rehydration beverage composition are listed below in Table 27. The prepared rehydration beverage composition contained zero calories per 8 ounces beverage volume. Taste testing of the beverage of Example 25 showed that the inventive rehydration beverage exhibited a light taste, i.e., less salty and less aftertaste, as compared to a Gatorade® Thirst Quencher rehydration beverage.

**Table 27. Formulation for a rehydration beverage composition containing an electrolyte blend according to Example 25.**

| **Ingredient** | **Weight % in the Beverage Composition** |
|---|---|
| Water | 99.58 |
| Sodium Chloride | 0.0846 |
| Sodium Lactate | 0.0610 |
| Potassium Citrate | 0.0139 |
| Potassium Chloride | 0.0159 |
| Rebaudioside A | 0.0155 |
| Citric Acid | 0.04 |
| Lactic Acid (88%) | 0.036 |
| Flavor | 0.15 |

### Example 26

An electrolyte blend was prepared according to the present invention, comprising sodium chloride, potassium chloride, potassium citrate, monopotassium phosphate, magnesium oxide and calcium lactate. Carbohydrates were also included in the electrolyte blend. The blend was then dissolved in water to form a rehydration beverage composition comprising 4.15% by weight carbohydrates. The particular ingredients and the weight percent of each ingredient included in the rehydration beverage composition are listed below in Table 28. The prepared rehydration beverage composition contained 200 mg sodium, 24 mg calcium, 15 mg magnesium, 250 mg potassium, and 227 mg chloride per 240 ml beverage volume.

The prepared rehydration beverage composition exhibits a salty taste that is less than 5.0 on a scale of 0 to 15 as determined by a trained sensory panel, wherein a salty taste of a 0.70 wt. % solution of sodium chloride in water equals 15 on the scale and a salty taste of water subjected to reverse osmosis equals 0 on the scale. Moreover, the prepared rehydration beverage composition exhibits a salty taste of less than that of the same beverage in which the electrolyte blend comprises sodium chloride, sodium citrate, and potassium phosphate in amounts that provide the same milligrams per serving of sodium, potassium and chloride, as determined by a trained sensory panel.

**Table 28. Formulation for a rehydration beverage composition containing an electrolyte blend according to Example 26.**

| **Ingredient** | **Weight % in the Beverage Composition** |
|---|---|
| Water | 94.587 |
| Maltodextrin | 0.95 |
| Is omaltulose | 2.20 |
| Glycerol | 1.00 |
| Sodium Chloride | 0.105 |
| Sodium Lactate | 0.202 |
| Monopotassium Phosphate | 0.133 |
| Potassium Citrate | 0.187 |
| Magnesium Oxide | 0.020 |
| Calcium Chloride | 0.050 |
| Calcium Lactate | 0.012 |
| Citric Acid | 0.175 |
| Phosphoric Acid (75%) | 0.125 |
| Lactic Acid (88%) | 0.100 |
| Flavor | 0.150 |
| Rebaudioside A | 0.004 |

### Example 27

Sensory characteristics are tested for aqueous solutions of a rehydration beverage, by a trained sensory panel. The numerical scale ranges from zero to fifteen, where a salty taste of a 0.70 weight % solution of sodium chloride in water equals 15 on the scale and a salty taste of water equals 0 on the scale.

The ingredients for the rehydration beverage includes water, sucrose, dextrose, citric acid, natural flavor, sodium chloride, sodium citrate, monopotassium phosphate, calcium lactate, and magnesium oxide. The rehydration beverage composition contains 200 mg sodium, 6 mg calcium, 3 mg magnesium, 90 mg potassium, and 96 mg chloride per 240 ml beverage volume. The rehydration beverage comprises 6 wt. % carbohydrates, and 50 calories per 240 ml.

The prepared rehydration beverage composition exhibits a salty taste that is less than 4.0 on a scale of 0 to 15 as determined by a trained sensory panel, wherein a salty taste of a 0.70 wt. % solution of sodium chloride in water equals 15 on the scale and a salty taste of water subjected to reverse osmosis equals 0 on the scale. Moreover, the rehydration beverage exhibits a salty taste of less than that of the same beverage in which the electrolyte blend comprises sodium chloride, sodium citrate, and potassium phosphate in amounts that provide the same milligrams per serving of sodium, potassium and chloride, as determined by a trained sensory panel.

### Example 28

An electrolyte blend was prepared according to the present invention, comprising sodium chloride, sodium acid sulfate, trisodium citrate and monopotassium phosphate. Carbohydrates were also included in the electrolyte blend. The blend was then dissolved in water to form a rehydration beverage composition comprising 6% by weight carbohydrates. The particular ingredients and the weight percent of each ingredient included in the rehydration beverage composition are listed below in Table 29. The prepared rehydration beverage composition contained 100 mg sodium, 338 mg potassium, 306 mg chloride, 24 mg calcium, and 15 mg magnesium per 240 ml beverage volume.

The prepared rehydration beverage composition exhibits a salty taste that is less than 5.0 on a scale of 0 to 15 as determined by a trained sensory panel, wherein a salty taste of a 0.70 wt. % solution of sodium chloride in water equals 15 on the scale and a salty taste of water subjected to reverse osmosis equals 0 on the scale. Moreover, the prepared rehydration beverage composition exhibits a salty taste that is less than that of the same beverage except that the electrolyte blend comprises sodium chloride, sodium citrate, and potassium phosphate in amounts that provide the same milligrams per serving of sodium, potassium and chloride, as determined by a trained sensory panel.

**Table 29. Formulation for a rehydration beverage composition containing an electrolyte blend according to Example 28.**

| **Ingredient** | **Weight % in the Beverage Composition** |
|---|---|
| Water | 94.78 |
| Maltodextrin | 0.95 |
| Isomaltulose | 2.20 |
| Glycerol | 1.00 |
| Sodium Chloride | 0.105 |
| Potassium Chloride | 0.134 |
| Monopotassium Phosphate | 0.133 |
| Potassium Citrate | 0.090 |
| Magnesium Oxide | 0.020 |
| Calcium Lactate | 0.110 |
| Citric Acid | 0.150 |
| Phosphoric Acid (75%) | 0.075 |
| Lactic Acid (88%) | 0.075 |
| Flavor | 0.250 |
| Rebaudioside A | 0.003 |

### Example 29

An electrolyte blend was prepared according to the present invention, comprising sodium chloride, potassium chloride, potassium citrate, monopotassium phosphate, magnesium oxide and calcium lactate. The blend was then dissolved in water to form a rehydration beverage composition. The prepared rehydration beverage composition contained 200 mg sodium, 24 mg calcium, 15 mg magnesium, 250 mg potassium, and 227 mg chloride per 240 ml beverage volume.

The prepared rehydration beverage composition exhibits a salty taste that is less than 5.0 on a scale of 0 to 15 as determined by a trained sensory panel, wherein a salty taste of a 0.70 wt. % solution of sodium chloride in water equals 15 on the scale and a salty taste of water subjected to reverse osmosis equals 0 on the scale. Moreover, the prepared rehydration beverage composition exhibits a salty taste of less than that of the same beverage in which the electrolyte blend comprises sodium chloride, sodium citrate, and potassium phosphate in amounts that provide the same milligrams per serving of sodium, potassium and chloride, as determined by a trained sensory panel.

### Example 30

An electrolyte blend was prepared according to the present invention, comprising sodium chloride, sodium citrate, monopotassium phosphate, calcium lactate, and magnesium oxide. The blend was then dissolved in water to form a rehydration beverage composition. The prepared rehydration beverage composition contained 200 mg sodium, 6 mg calcium, 3 mg magnesium, 90 mg potassium, and 96 mg chloride per 240 ml beverage volume.

The prepared rehydration beverage composition exhibits a salty taste that is less than 4.0 on a scale of 0 to 15 as determined by a trained sensory panel, wherein a salty taste of a 0.70 wt. % solution of sodium chloride in water equals 15 on the scale and a salty taste of water subjected to reverse osmosis equals 0 on the scale. Moreover, the rehydration beverage exhibits a salty taste of less than that of the same beverage in which the electrolyte blend comprises sodium chloride, sodium citrate, and potassium phosphate in amounts that provide the same milligrams per serving of sodium, potassium and chloride, as determined by a trained sensory panel.

Given the benefit of the above disclosure and description of exemplary embodiments, it will be apparent to those skilled in the art that numerous alternate and different embodiments are possible in keeping with the general principles of the invention disclosed here. Those skilled in this art will recognize that all such various modifications and alternative embodiments are within the true scope and spirit of the invention. The appended claims are intended to cover all such modifications and alternative embodiments. It should be understood that the use of a singular indefinite or definite article (e.g., "a," "an," "the," etc.) in this disclosure and in the following claims follows the traditional approach in patents of meaning "at least one" unless in a particular instance it is clear from context that the term is intended in that particular instance to mean specifically one and only one. Likewise, the term "comprising" is open ended, not excluding additional items, features, components, etc.

## Claims

1. A beverage comprising:
water;
at least one sweetener, the at least one sweetener present in an amount between 0 wt. % and 10 wt%;
at least one acid, the at least one acid present in an amount between 0 wt. % and 1.0 wt %; and
an electrolyte blend comprising:
sodium chloride;
sodium lactate; and
at least one of potassium chloride, potassium citrate and monopotassium phosphate,

2. The beverage of claim 1, wherein the electrolyte blend comprises sodium chloride, sodium lactate, and monopotassium phosphate.

3. The beverage of claim 1 or 2, wherein the at least one sweetener is selected from the group consisting of sucrose, isomaltulose, rebaudioside A, and combinations thereof.

4. The beverage of claim 1 or 2, wherein the beverage exhibits a salty taste of less than 1.5 on a scale of 0 to 15 as determined by a trained sensory panel, wherein a salty taste of a 0.70 wt. % solution of sodium chloride in water equals 15 on the scale and a salty taste of water subjected to reverse osmosis equals 0 on the scale.

5. The beverage of claim 1 or 2, wherein the beverage exhibits a salty taste that is lower than a salty taste of the same beverage except that the electrolyte blend consists of sodium chloride, sodium citrate, and potassium phosphate in amounts that provide the same milligrams per serving of sodium, potassium and chloride.

6. The beverage of claim 1, wherein the electrolyte blend comprises a magnesium-containing electrolyte and a calcium-containing electrolyte.

7. The beverage of claim 6, wherein the magnesium-containing electrolyte comprises magnesium oxide and the calcium-containing electrolyte comprises calcium lactate.

8. The beverage of any of the claim 6, wherein the electrolyte blend provides 50 to 250 mg sodium per serving, 20 to 350 mg potassium per serving, 10 to 250 mg chloride per serving; 10 to 50 mg magnesium per serving and 10 to 50 mg calcium per serving, wherein a serving comprises 240 ml of the beverage, and wherein the beverage exhibits a salty taste of less than 5.0 on a scale of 0 to 15 as determined by a trained sensory panel, wherein the salty taste of a 0.70 wt. % solution of sodium chloride in water equals 15 on the scale and the salty taste of water subjected to reverse osmosis equals 0 on the scale.

9. The beverage of claim 1, wherein the electrolyte blend provides 110 mg sodium per serving, 20 mg potassium per serving, and 90 mg chloride per serving.

10. An electrolyte blend comprising sodium lactate; potassium gluconate; and calcium chloride.

11. The electrolyte blend of claim 10 wherein the blend is a powder for reconstitution into a beverage.

12. A beverage comprising:
the electrolyte blend of claim 10; and
water;
wherein the beverage comprises less than 40 calories per 240 ml.

13. The beverage of claim 12, further comprising at least one of maltodextrin, isomaltulose, glycerol, and dextrose.

14. The beverage of claim 12, wherein the beverage exhibits a salty taste of less than 1.5 on a scale of 0 to 15 as determined by a trained sensory panel, wherein a salty taste of a 0.70 wt. % solution of sodium chloride equals 15 on the scale and a salty taste of water subjected to reverse osmosis equals 0 on the scale.

15. A beverage comprising;
water; and
the electrolyte blend of claim 10, comprising:
50 to 220 mg sodium per serving;
20 to 110 mg potassium per serving;
80 to 100 mg chloride per serving; and
50 mg calcium per serving;
wherein a serving comprises 240 milliliters of the beverage.
